# EUROPÄISCHE PATENTSCHRIFT

(11) **EP 1 483 309 B1**
(45) Veröffentlichungstag und Bekanntmachung des Hinweises auf die Patenterteilung: **26.07.2006**
(21) Anmeldenummer: 03708141.1
(22) Anmeldetag: 26.02.2003
(51) Int. Cl.: C08G 63/82, C08G 63/08, C07D 315/00

(54) **VERFAHREN ZUR HERSTELLUNG VON POLY(3-HYDROXYALKANOATEN) IN GEGENWART EINES NUCLEOPHILS**
METHOD FOR THE PRODUCTION OF POLY(3-HYDROXYALKANOATES) IN THE PRESENCE OF A NUCLEOPHILE
PROCEDE DE PRODUCTION DE POLY(3-HYDROXYALCANOATES) EN PRESENCE D'UN NUCLEOPHILE

(30) Priorität: 01.03.2002 DE 10208810
(43) Veröffentlichungstag der Anmeldung: 08.12.2004
(73) Patentinhaber: BASF Aktiengesellschaft, 67056 Ludwigshafen (DE)
(72) Erfinder: LUINSTRA, Gerrit, 68161 Mannheim (DE); ALLMENDINGER, Markus, 73326 Deggingen (DE); RIEGER, Bernhard, 89275 Oberelchingen (DE)
(86) Internationale Anmeldenummer: PCT/EP2003/001933
(87) Internationale Veröffentlichungsnummer: WO 2003/074585

(56) Entgegenhaltungen:
- EP-A- 0 577 206
- GB-A- 1 020 575
- PATENT ABSTRACTS OF JAPAN vol. 018, no. 591 (C-1272), 11. November 1994 (1994-11-11) & JP 06 220179 A (SUMITOMO METAL IND LTD), 9. August 1994 (1994-08-09)
- J. MARCH: ADVANCED ORGANIC CHEMISTRY, 1985, 3TH EDITION, SEITEN 333-334

## Beschreibung

Die vorliegende Erfindung betrifft ein Verfahren zur Herstellung von Poly(3-hydroxyalkanoaten).

Poly-β-hydroxyfettsäuren bzw. Poly(3-hydroxyalkanoate) sind als biologisch vollständig abbaubare Polymere in ökologischer wie auch wirtschaftlicher Hinsicht von großem Interesse. Dieses trifft insbesondere auch auf Polyhydroxybutyrolacton zu, das unter bestimmten Vorgaben über ein thermoplastisches Eigenschaftsprofil verfügt.

Kommerziell sind Polyhydroxybutyrolactone bislang fermentativ hergestellt worden (s.a. Y. Doi, Microbial Polyester, VCH Weinheim 1980, u.a. Seiten 1 bis 14; und Produktbroschüre Biopol® der Firma Zeneca Ltd., 1993). Allerdings lässt sich das so erhaltene Polymerprodukt nur aufwendig aus dem Fermentationsgemisch in reiner Form gewinnen (Y. Doi, ibid., Seiten 21 ff). Beispielsweise sind zunächst die Zellen aufzubrechen, bevor das Polymerrohprodukt extrahiert werden kann. Die resultierenden Herstellkosten können daher gegenwärtig mit denen für herkömmliche Thermoplaste nicht konkurrieren. Von Nachteil ist außerdem, dass das mittels Mikroorganismen hergestellte Polymer ausschließlich in hochisotaktischer Form anfällt, womit es über einen hohen Schmelzpunkt von etwa 180°C verfügt und für gängige Kunststoffverarbeitungstechniken wie Extrusion oder Spritzguss aufgrund von Zersetzungsreaktionen nicht in Frage kommt. Zudem sind solche Materialien ohnehin relativ steif und brüchig. Das Handelsprodukt Biopol® der Firma Zeneca Ltd. enthielt demgemäß neben Hydroxybutyrateinheiten als Hauptbestandteil stets auch zumindest geringe Anteile an statistisch verteilten Hydroxyvalerateinheiten. Nur auf diese Weise konnte ein ausreichend flexibles und zähes Material erhalten werden (s.a. Y. Doi, ibid., Seiten 107 bis 133).

Gemäß der WO 94/00506 und WO 95/20616 gelangt man ebenfalls ausgehend von β-Butyrolacton über die ringöffnende Polymerisation zu Poly-β-hydroxybutyrolacton. Diese Reaktionen verlaufen jedoch nicht stereospezifisch und führen zu ataktischen Polymeren, die bei Raumtemperatur zähfließend sind und ebenfalls für gängige Werkstoffanwendungen von Polymeren nicht in Frage kommen. Akzeptable Ausbeuten und Molekulargewichte werden nach der WO 94/00506 ohnehin nur dann erhalten, wenn unter absolut wasserfreien bzw. nahezu wasserfreien Bedingungen polymerisiert wird, was aufwendige Trocknungsmaßnahmen für die verwendeten Reagenzien und Gerätschaften erforderlich macht. Gleiches trifft zu auf das in der WO 95/20616 beschriebene Verfahren, bei dem anstelle von gemäß WO 94/00506 zu verwendenden Carboxylatanionen als Initiatoren Alkylzinkalkoxide eingesetzt werden.

Um kunststofftechnisch verwertbares isotaktisches Poly-β-butyrolacton zu erhalten, ist in beiden vorgenannten Fällen von enantiomeremreinen β-Butyrolacton als Monomerverbindung auszugehen. Der synthetische Zugang zu diesen Verbindungen ist jedoch, insbesondere für großtechnische Anwendungen, sehr komplex und kostenintensiv und auch die Aufreinigung ist mit hohem Aufwand verbunden (s.a. Seebach et al., Helv. Chim. Acta 1994, 77, Seiten 1099 bis 1123 und von Lengweiler, Helv. Chim. Acta 1996, 79, Seiten 670 bis 701, sowie Breitschuh et al., Chimia 1990 (44), S. 216 bis 218. und Ohta et al., J.Chem.Soc., Chem. Commun. 1992, S. 1725 bis 1726).

(Teil)syndiotaktisches oder (teil)isotaktisches Poly-β-hydroxybutyrolacton ist des weiteren über eine stereospezifische Polymerisation von R/S-β-Butyrolacton zugänglich (s.a. Gross et al., Macromolecules 1988 (21), S. 2657 bis 2668; Kricheldorf et al., Macromolecules 1994 (27), S. 3139 bis 3146). Allerdings lassen sich auch mit diesen Verfahren Produktverunreinigungen durch Anteile von ataktischem Poly-β-hydroxybutyrolacton, die nur sehr aufwendig aus dem Polymerisationsgemisch wieder zu entfernen sind, nie vollständig vermeiden. Für Werkstoffanwendungen kommen daher solche Materialien nicht in Frage. Nachteilig an den beschriebenen stereospezifischen Polymerisationen ist weiterhin deren lange Reaktionszeit.

Die stereospezifische Polymerisation von Butyrolacton kann darüber hinaus sowohl unter Retention, Inversion oder Teilinversion verlaufen (Hori et al., Macromolecules 1993 (26) S. 5533 bis 5534; Zhang et al., Polymer Preparation, 1989 (30) S. 400 bis 401; Jedlinski et al., Macromolecules 1998 (31) S. 6718 bis 6720; und Zhang et al. Macromolecules 1990 (23) S. 3206 bis 3212).

GB-A-102 0575 beschreibt die Carbonylierung von Ethylenoxid in Gegenwart von CO₂(CO)₈ und Wasser.

In der EP-A 0 577 206 wird die Carbonylierung von Epoxiden mit Hilfe eines Katalysatorsystems enthaltend eine Cobaltquelle und hydroxysubstituierte Pyridinverbindungen beschrieben. Es wurde beobachtet, dass sich das mit hoher Selektivität erhaltene und erwünschte Primärprodukt, β-Propiolacton, insbesondere in Gegenwart bestimmter Halogenverbindungen als Promotoren und nach längerer Zeit in Teilen zu dem Sekundärprodukt Poly-3-hydroxy-propionat umsetzen kann. Weiterhin wird offenbart, daß bei Einsatz nicht-hydroxysubstituierter Pyridinverbindungen wie Pyridin, ein drastischer Einbruch sowohl des Umsatzes als auch der Selektivität zum Primärprodukt zu beobachten ist, was gemäß der Gesamtlehre der Schrift auch für die aus dem Primärprodukt gebildeten Sekundärprodukte zu erwarten ist.

Der vorliegenden Erfindung lag daher die Aufgabe zugrunde, ein verbessertes Verfahren zur Herstellung von Poly(3-hydroxyalkanoaten) mit thermoplastischem Eigenschaftsprofil zur Verfügung zu stellen, das sich insbesondere auch großtechnisch einfach und kostengünstig durchführen lässt und bei dem keine aufwendigen Reinigungs- oder Auftrennschritte für Edukte und/oder Produkte anfallen und für das auch unproblematisch auf enantiomerenreine Edukte zurückgegriffen werden kann.

Demgemäß wurde ein katalytisches Verfahren zur Herstellung von thermoplastischen Poly-(3-hydroxyalkanoaten) durch Umsetzung einer Oxiranverbindung mit Kohlenmonoxid gefunden, bei dem man die Monomeren in Gegenwart
a) mindestens eines Nucleophils, welches eine organische Verbindung enthaltend mindestens ein Atom der Gruppe 15 des Periodensystems der Elemente, ausgenommen hydroxy-substituierter Pyridinverbindungen, ist und
b) mindestens eines ein- oder mehrkernigen anionischen Übergangsmetallkomplexes
   der allgemeinen Formel (I)

   (M_{β}⁽ⁿ⁺⁾)ₘ[M_{α}(L)₄]₁, (I),

   in der die Variablen und Indizes die folgende Bedeutung haben:
   - M_{α}: ein Übergangsmetall der 8. bis 10. Gruppe des Periodensystems der Elemente mit der Formalladung -1,
   - L: PR₃, P(OR)₃, NR₃, SR₂, OR₂, CO, R-CN, R-NO₂, (RO)(R'O)C=O, (R)(R')C=O, (R)C=O(OR'),
   - M_{β}: ein Metall der 1. und 2. Gruppe des Periodensystems der Elemente, Zn oder Hg, Bis(triarylphosphin)iminium, Trityl, Si(R)₃ oder T(R)₄ mit
   - T: N, P oder As,
   - R, R': H, Alkyl, Aryl oder Arylalkyl,
   - m, n: 1 oder 2 und
   - l: n x m, umsetzt.

Die Copolymerisation kann auch in Gegenwart von Protonenquellen, beispielsweise Säuren, vorgenommen werden.

Zusätzlich können Übergangsmetallkomplexe (A) eingesetzt werden.

Im Übergangsmetallkomplex (A) liegen die Liganden üblicherweise als Neutralliganden vor. Die Anzahl der Liganden hängt vom jeweiligen Metall ab und richtet sich nach der koordinativen Absättigung des Übergangsmetalls im Grundzustand. Geeignete Neutralliganden sind z.B. der Kohlenmonoxid-, Nitro-, Nitroso-, Carbonat-, Ether-, Sulfoxid-, Amid-, Nitril- oder Phosphinligand. Diese Liganden sind im allgemeinen über ein freies Elektronenpaar koordinativ an das Übergangsmetall gebunden. Bevorzugt wird Kohlenmonoxid als Ligand eingesetzt. Es können in einer Übergangsmetallverbindung (A) auch unterschiedliche Liganden nebeneinander vorliegen, z.B. wie in Co₂(CO)₆(PMe₂Ph)₂. Bevorzugt kommen als Übergangsmetallkomplexe (A) Co₂(CO)₈, Ru₃(CO)₁₂, Rh₄(CO)₁₂, Rh₆(CO)₁₆, Co₄(CO)₁₂, Co(CO)₃(NO), Fe₂(CO)₁₀, Fe₂(CO)₉, Ni(CO)₄, Mn₂(CO)₁₀, Mo(CO)₆ und W(CO)₆ oder deren Mischungen in Frage. Besonders bevorzugt sind Ru₃(CO)₁₂, Co₄(CO)₁₂, Co(CO)₃(NO), Ni(CO)₄ und Mn₂(CO)₁₀, insbesondere Co₂(CO)₈.

Selbstverständlich können auch Mischungen unterschiedlicher Neutralkomplexe verwendet werden.

Die Herstellung der Übergangsmetallkomplexe (A) ist dem Fachmann im allgemeinen bekannt und findet sich z.B. bei F.G. Stone, E.W. Abel, und G. Wilkinson, "Comprehensive Organometallic Chemistry - The Synthesis, Reactions and Structures of Organometallic Compounds", Pergamon Press, Oxford, 1982, z.B. in Vol. 5, beschrieben. Im übrigen sind solche Komplexe auch kommerziell erhältlich.

Unter anionischen Übergangsmetallkomplexverbindungen (I) im Sinne der vorliegenden Erfindung sind solche Verbindungen zu verstehen, in denen mindestens ein Zentralmetall oder eine Ligandeneinheit über eine negative Formalladung verfügt. Geeignete anionische Übergangsmetallverbindungen (I) verfügen über ein Zentralmetall aus den Gruppen 5 bis 11, bevorzugt aus den Gruppen 8 bis 10 des Periodensystems der Elemente. Als Metalle kommen beispielsweise Cobalt, Eisen, Rhodium und Ruthenium in Frage. Besonders bevorzugt kommen Übergangsmetalle (I) auf der Basis der Metalle Cobalt und Rhodium zum Einsatz. Es können ein- oder mehrkernige Komplexe (I) verwendet werden, wobei in letzteren die Metalle übereinstimmen.

Im Übergangsmetallkomplex (I) liegen die Liganden üblicherweise als Neutralliganden vor. Die Anzahl der Liganden hängt vom jeweiligen Metall ab und richtet sich nach der koordinativen Absättigung des Übergangsmetalls im Grundzustand. Geeignete Neutralliganden sind z.B. der Kohlenmonoxid-, Nitro-, Nitroso-, Carbonat-, Ether-, Sulfoxid-, Amid-, Nitril- oder Phosphinligand. Für die Übergangsmetallkomplexe (I) kann im allgemeinen auf die gleichen Neutralliganden zurückgegriffen werden, die auch für die Übergangsmetallkomplexe (A) in Frage kommen. Diese Liganden sind im allgemeinen über ein freies Elektronenpaar koordinativ an das Übergangsmetall gebunden. Bevorzugt wird Kohlenmonoxid als Ligand eingesetzt. Es können an ein anionischen Metallzentrum einer Übergangsmetallverbindung (I) auch unterschiedliche Liganden nebeneinander komplexiert sein, z.B. wie bei [(P(Ph)₃)Co(CO)₃]⁻, [(P(Me₂Ph))Co(CO)₃]⁻, [(CNPh)Co(CO)₃]⁻ oder [Co(CO)₃(NO)]⁻. Als kationische Gegenionen für die Übergangsmetallverbindung (I) kommen prinzipiell alle Kationen in Frage.

Übergangsmetallkomplexverbindungen (I) haben die folgende Formel

(M_{β}⁽ⁿ⁺⁾)ₘ[M_{α}(L)₄]ₗ, (I),

in der die Variablen und Indizes die folgende Bedeutung haben:
- M_{α}: ein Übergangsmetall der 8. bis 10. Gruppe des Periodensystems der Elemente, insbesondere Cobalt und Rhodium, mit der Formalladung -1,
- L: PR₃, P(OR)₃, NR₃, SR₂, OR₂, CO, R-CN, R-NO₂, (RO)(R'O)C=O, (R)(R')C=O, (R)C=O(OR'), insbesondere CO,
- M_{β}: ein Metall der 1. und 2. Gruppe des Periodensystems der Elemente, Zn oder Hg, insbesondere Na, K, Cs, Mg, Ca, Zn und Hg, Bis(triarylphosphin)iminium, Trityl, Si(R)₃ oder T(R)₄ mit
- T: N, P oder As, insbesondere N,
- R, R': H, Alkyl, Aryl oder Arylalkyl,
- m,n: 1 oder 2 und
- 1: n x m.

Als Reste R und R' kommen, unabhängig voneinander, z.B. Wasserstoff, geradkettiges oder verzweigtes C₁- bis C₁₀-Alkyl wie Methyl, Ethyl, n- oder i-Propyl, n-, i- oder t-Butyl oder n- oder i-Pentyl, C₆- bis C₁₄-Aryl wie Phenyl oder Naphthyl oder Alkylaryl mit 1 bis 10 C-Atomen im Alkyl- und 6 bis 14-C-Atomen im Arylteil wie Benzyl in Frage. Geeignete aromatische Reste umfassen auch Heterocylen und stellen fünf- oder sechsgliedrige Monocyclen wie Pyridyl und Phenyl sowie annellierte Systeme wie Anthracen dar.

Unter den nichtmetallischen Kationen M_{β} sind Tetraphenyl-, Tetramethyl-, Tetraethyl- und Tetra-n-butylammonium, -phosphonium und -arsenium sowie Bis(triarylphosphin)iminium bevorzugt. Besonders geeignete Arylreste im Bis(triarylphosphin)iminium-Kation sind Phenyl und Naphthyl, wobei Bis(triphenylphosphin)iminium bevorzugt ist.

Als metallische Kationen M_{β} kommen u.a. Alkali- und Erdalkalikationen in Betracht. Bevorzugt wird auf Lithium, Natrium, Kalium und Cäsium zurückgegriffen. Übergangsmetallkomplexe (I) mit metallischen Kationen M_{β} sind insbesondere bevorzugt, wenn die Copolymerisation in Abwesenheit einer Säure durchgeführt wird.

Vorteilhafter Weise greift man auf Übergangsmetallkomplexe (I), ausgewählt aus der Gruppe enthaltend Li[Co(CO)₄], Na[Co(CO)₄], K[Co(CO)₄], Cs[Co(CO)₄], (R₄N)[Co(CO)₄], (R₄P) [Co(CO)₄], (R₄As) [Co(CO)₄], (PPN) [Co(CO)₄], Li[Rh(CO)₄], Na[Rh(CO)₄], K[Rh(CO)₄], Cs[Rh(CO)₄], (R₄N) [Rh(CO)₄], (R₄P) [Rh(CO)₄], (R₄As)[Rh(CO)₄], (PPN)[Rh(CO)₄], Li[Ir(CO)₄], Na[Ir(CO)₄], K[Ir(CO)₄], Cs[Ir(CO)₄], (R₄N)[Ir(CO)₄], (R₄P) [Ir(CO)q], (R₄As)[Ir(CO)₄], (PPN)[Ir(CO)₄], Li₂[Fe(CO)₄], Na₂[Fe(CO)₄], K₂[Fe(CO)₄], Cs₂[Fe(CO)₄], (R₄N)₂[Fe(CO)₄], (R₄P)₂[Fe(CO)₄], (R₄As)₂[Fe(Co)₄], (PPN)₂[Fe(CO)₄], (PPN)[HFe(CO)₄] und (PPN)₂[Fe₂(CO)₈] mit R in der Bedeutung von Methyl, Ethyl, n- oder i-Propyl, n-, i- oder t-Butyl, Phenyl oder Benzyl, zurück.

Unter den anionischen Komplexen (I) mit Cobalt in der Oxidationsstufe -1 sind Tetraphenylphosphonium-, Tetraphenylarsenium-, Tetraphenylammonium-, Tetraethylphosphonium-, Tetraethylarsenium- und Tetraethylammoniumtetracarbonylcobaltat sowie Natriumtetracarbonylcobaltat besonders bevorzugt.

Selbstverständlich können auch Mischungen an Übergangsmetallkomplexen (I) eingesetzt werden.

Die Herstellung anionischer Übergangsmetallkomplexverbindungen (I) ist dem Fachmann im allgemeinen bekannt. Geeignete Herstellverfahren finden sich z.B. bei F.G. Stone, E.W. Abel, und G. Wil kinson, "Comprehensive Organometallic Chemistry - The Synthesis, Reactions and Structures of Organometallic Compounds", Pergamon, Oxford, 1982, und F.G. Stone, E.W. Abel, und G. Wilkinson, "Comprehensive Organometallic Chemistry II - A Review of the Literature 1982 - 1994", Pergamon Press, Oxford, z.B. in Vol. 8, beschrieben. Im übrigen sind solche Komplexe auch kommerziell erhältlich.

Die anionischen Komplexe (I) liegen üblicherweise in Mengen von 0,01 bis 10, bevorzugt von 0,05 bis 5 und besonders bevorzugt von 0,1 bis 3 mol-%, bezogen auf die Oxiranverbindung, im Polymerisationsgemisch vor, falls keine Neutralkomplexe (A) eingesetzt werden.

Die Neutralkomplexe (A) und anionischen Komplexe (I) können auch gemeinsam eingesetzt werden; die Gesamtmenge von (A) und (I) liegt in diesem Fall üblicherweise im Bereich von von 0,01 bis 10, bevorzugt von 0,05 bis 5 und besonders bevorzugt von 0,1 bis 3 mol-%, bezogen auf die Oxiranverbindung, im Polymerisationsgemisch vor.

Das molare Verhältnis von anionischem Komplex (I) zu Neutralkomplex (A) im Polymerisationsgemisch liegt bei gemeinsamem Einsatz von (A) und (I) üblicherweise im Bereich von 0,1 bis 100, bevorzugt von 1 bis 50, besonders bevorzugt von 2 bis 20. Ganz besonders bevorzugt sind (I)/(A)-Verhältnisse im Bereich von 3 bis 4. Die molaren Verhältnisse beziehen sich bei mehrkernigen Komplexen auf die Gesamtstoffmenge der Übergangsmetallatome.

In einer bevorzugten Ausführungsform werden für die katalytische Herstellung von Poly(3-hydroxyalkanoaten) als Übergangsmetallkomplexe (A) Co₂(CO)₈ und/oder Ru₃(CO)₁₂ im Gemisch mit Et₄NCoCO₄, NaCoCO₄, (PPN)CoCO₄ und/oder Ph₄PCo(CO)₄ als Übergangsmetallkomplexe (I) eingesetzt.

Das erfindungsgemäße Verfahren kann auch in Gegenwart einer Protonenquelle, beispielsweise in Gegenwart einer Säure, insbesondere einer Broenstedt-Säure stattfinden. Als geeignete Brönstedt-Säuren kommen die üblichen Mineralsäuren wie Salzsäure, Schwefelsäure oder Phosphorsäure in verdünnter sowie insbesondere in konzentrierter Form, Tetrafluoroborsäure, Phenol, substituierte Phenole und Carbonsäuren wie Ameisensäure, Essigsäure, Trichlor- oder Trifluoressigsäure, Benzoesäure, Glutarsäure oder Adipinsäure in Frage. Bevorzugt wird Essigsäure in Form des so genannten Eisessigs eingesetzt. Hierunter soll vorliegend wasserfreie bzw. nahezu wasserfreie Essigsäure, insbesondere mit einem Wasseranteil von maximal 2 Vol.-%, verstanden werden. Salzsäure wird vorzugsweise gelöst in Ether zugegeben. Bevorzugt greift man auf Essigsäure, insbesondere Eisessig, Salzsäure, gelöst in Ether, Benzoesäure, Phenol, Tetrafluoroborsäure oder deren Mischungen zurück.

Die Säure wird regelmäßig in Menge von 0 bis 10 mol-%, bevorzugt in Mengen von 0 bis 2 mol-%, bezogen auf die Oxiranverbindung, eingesetzt.

Es können auch beliebige Mischungen der vorgenannten Säuren zum Einsatz kommen.

In den erfindungsgemäßen Verfahren kann die Copolymerisation prinzipiell in Gegenwart jedes Nukleophils, ausgenommen hydroxy-substituierter Pyridinverbindungen, durchgeführt werden. Der Ausdruck "hydroxysubstituierte Pyridinverbindung" umfaßt jede Verbindung, enthaltend einen Pyridinring, d.h. einen sechsgliedrigen heteroaromatischen Ring enthaltend ein Imino-Stickstoffatom, und mindestens einen Hydroxy-Substituenten, beispielsweise auch mehrkernige Verbindungen wie Chinolin und 4,4'-Bipyridyl, vorausgesetzt, diese enthalten einen Hydroxysubstituenten.

Als Nucleophile sind in den erfindungsgemäßen Verfahren organische Verbindungen enthaltend mindestens ein Atom der Gruppe 15 des Periodensystems der Elemente, ausgenommen hydroxy-substituierter Pyridinverbindungen, einsetzbar. Beispielsweise sind heterozyklische Verbindungen enthaltend Stickstoff und/oder Phosphor als Heteroatom und Mono-, Di- und Trialkyl- und/oder - arylamine und Mono-, Di- und Trialkyl- und/oder -arylphosphane, ausgenommen hydroxy-substituierter Pyridinverbindungen, als Nukleophile besonders geeignet.

Als ganz besonders bevorzugte Nukleophile kommen in den erfindungsgemäßen Verfahren solche ausgewählt aus der Gruppe enthaltend Pyridin, Lutidin, Imidazol, Chinolin, Dimethylaminopyridin, Triethylamin, Methylalanin, Morpholin, 1,4-Diazabicyclo[2,2,2]octan und Pyridin zum Einsatz, insbesondere Pyridin.

Das Nukleophil in den erfindungsgemäßen Verfahren kann bevorzugt chiral sein und beispielsweise in einer optische Reinheit zwischen 1 und 100% eingesetzt werden.

Das Nukleophil wird in den erfindungsgemäßen Verfahren üblicherweise in Mengen von 0,01 bis 10, bevorzugt von 0,1 bis 5 und besonders bevorzugt von 0,2 bis 3 mol-%, bezogen auf die Oxiranverbindung eingesetzt.

Es können auch beliebige Mischungen der vorgenannten Nukleophile zum Einsatz kommen.

Kohlenmonoxid ist kommerziell ohne weiteres erhältlich. Es kann auch im Gemisch mit Inertgasen wie Argon oder Stickstoff, also in verdünnter Form eingesetzt werden.

Als Oxiranverbindungen sind Ethylenoxid sowie substituierte Epoxide geeignet. Hierbei handelt es sich üblicherweise um solche Verbindungen, die unter die folgende allgemeine Formel (II) fallen:

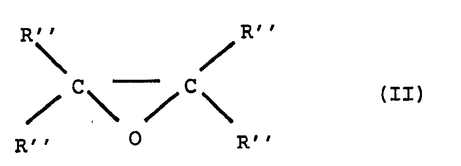

Darin bedeuten die Reste R'' unabhängig voneinander Wasserstoff, Halogen, Nitrogruppe -NO₂, Cyanogruppe -CN, Estergruppe -COOR oder eine Kohlenwasserstoffgruppe mit 1 bis 32 C-Atomen, die substituiert sein kann. In einer Verbindung (II) können die Reste R'' vollständig oder teilweise übereinstimmen oder auch vier unterschiedliche Reste darstellen.

Bevorzugt wird auf geminal substituierte Epoxide, besonders bevorzugt auf ausschließlich in 1-Position substituierte Epoxide zurückgegriffen.

Geeignete Kohlenwasserstoffgruppen R'' sind beispielsweise C₁₋₃₂-Alkyl wie Methyl, Ethyl, i- oder n-Propyl, i-, n- oder t-Butyl, n-Pentyl oder n-Hexyl, C₂₋₂₀-Alkenyl wie Propenyl oder Butenyl, C₃-C₂₀-Cycloalkyl wie Cyclopropyl, Cyclobutyl, Cyclopentyl oder Cyclohexyl, C₆₋₁₈-Aryl wie Phenyl oder Naphthyl und C₇₋₂₀-Arylalkyl, z.B. Benzyl. Dabei können zwei Reste R'', falls sie sich an verschiedenen C-Atomen der Epoxygruppe befinden, miteinander verbrückt sein und so eine C₃₋₂₀-Cycloalkylengruppe bilden.

Als Substituenten, mit denen die C₁₋₃₂-Kohlenwasserstoffgruppe substituiert sein kann, kommen insbesondere folgende Gruppen in Betracht: Halogen, Cyano, Nitro, Thioalkyl, tert.-Amino, Alkoxy, Aryloxy, Arylalkyloxy, Carbonyldioxyalkyl, Carbonyldioxyaryl, Carbonyldioxyarylalkyl, Alkoxycarbonyl, Aryloxycarbonyl, Arylalkyloxycarbonyl, Alkylcarbonyl, Arylcarbonyl, Arylalkylcarbonyl, Alkylsulfinyl, Arylsulfinyl, Arylalkylsulfinyl, Alkylsulfonyl, Arylsulfonyl und Arylalkylsulfonyl.

Bevorzugt verwendet man als Oxiranverbindung Ethylenoxid, Propylenoxid, Butylenoxid (1-Butenoxid, BuO), Cyclopentenoxid, Cyclohexenoxid (CHO), Cycloheptenoxid, 2,3-Epoxypropylphenylether, Epichlorhydrin, Epibromhydrin, i-Butenoxid (IBO), Styroloxid oder Acryloxide. Besonders bevorzugt verwendet man Ethylenoxid (EO), Propylenoxid (PO), Butylenoxid, Cyclopentenoxid, Cyclohexenoxid oder i-Butenoxid. Ganz besonders bevorzugt Ethylenoxid und Propylenoxid oder deren Mischungen.

Für thermoplastische Werkstoffanwendungen von Bedeutung ist, wenn Ethylenoxid als Oxiranverbindung eingesetzt wird, u.a., dass man einen Polyester mit einem ausreichend hohen Molekulargewicht M_{w} erhält. Mit dem erfindungsgemäßen Verfahren sind für solche Polyester ohne weiteres Molekulargewichte M_{w} von mindestens 5.000 g/mol sowie insbesondere von mindestens 6.000 g/mol zugänglich. Bei Verwendung von in 1-Position substituierten Oxiranverbindungen werden thermoplastische Polyester vor allem dann erhalten, wenn diese nicht in Form des Racemats eingesetzt werden, sondern entweder enantiomerenrein oder, in Bezug auf das Stereozentrum in 1-Position, in optisch angereicherter Form vorliegen, d.h., das R-1/S-1-Verhältnis bzw. S-1/R-1-Verhältnis ist ungleich 1. Bevorzugt kommen R-1/S-1-Verhältnisse sowie insbesondere S-1/R-1-Verhältnisse im Bereich von 1/4 bis 1/100, besonders bevorzugt im Bereich von 1/10 bis 1/40 zum Einsatz. Besonders bevorzugt wird auf Propylenoxid mit einer Enantiomerenreinheit im Bereich von 60 bis 99 %-ee und insbesondere im Bereich von 80 bis 95 %-ee zurückgegriffen. Mit dem erfindungsgemäßen Verfahren lassen sich aus enantiomerenreinen oder optisch angereicherten Oxiranverbindungen Polyester mit Molekulargewichten M_{w} von mindestens 4.000 g/mol erhalten, die über ein thermoplastisches Eigenschaftsprofil verfügen.

Die für das erfindungsgemäße Verfahren zu verwendenden Oxiranverbindungen können z.B. über dem Fachmann bekannte Epoxidierungen von endständigen Olefinen gewonnen werden. Verläuft die Epoxidierung stereounspezifisch, ist eine Racematspaltung vorzunehmen. Methoden zur Racematspaltung, z.B. mittels HPLC-Chromatographie mit chiralem Säulenmaterial, sind dem Fachmann bekannt. Vorteilhafterweise stellt man die Oxiranverbindung ausgehend von einem endständigen Olefin über etablierte stereoselektive Verfahren unmittelbar in enantiomerenreiner oder in optisch angereicherter Form dar. Ein geeignetes Verfahren ist z.B. die so genannte Sharpless-Epoxidierung (s.a. J.Am.Chem.Soc. 1987 (109), S. 5765 ff. und 8120 ff.; sowie "Asymmetric Synthesis", Hrsg. J.D. Morrison, Academic Press, New York, 1985, Band 5, Kapitel 7 und 8).

Des weiteren gelangt man über bei Jacobsen et al. (Tetrahedron Lett. 1997, 38, Seiten 773 bis 776; und J. Org. Chem. 1998, 63, Seiten 6776 bis 6777, J. Org. Chem. 1999, 64, 2164-2165) beschriebene Verfahren ausgehend von endständigen Olefinen bzw. racemischen terminalen Epoxiden zu optisch angereicherten Oxiranverbindungen, die auch großtechnisch einfach durchzuführen sind (s.a. Acc. Chem. Res. 2000, 33, Seiten 421 bis 431).

Selbstverständlich ist es auch möglich, optisch angereicherte Oxiranverbindungen dadurch herzustellen, dass man zur enantiomerenreinen Oxiranverbindung das Racemat in entsprechender Menge beimengt.

Als Verbindungen mit endständiger Doppelbindung kommen grundsätzlich alle Olefine dieser Verbindungsklasse in Betracht, also z.B. Propen, 1-Buten, 1-Penten, 1-Hexen, 1-Hepten oder 1-Octen.

Die Poly(3-hydroxyalkanoate) werden gemäß dem erfindungsgemäßen Verfahren durch Umsetzung von Oxiranverbindungen und Kohlenmonoxid in Gegenwart der beschriebenen Katalysatormischung und gegebenenfalls in Gegenwart von Proronenquellen, beispielsweise Säuren, hergestellt.

In der Regel ist auch ein Lösungsmittel, zumeist in geringen Mengen, zugegen, das in der Hauptsache den Zweck hat, die Katalysatorverbindungen, das Nukleophil und/oder gegebenenfalls die Protonenquelle in das Polymerisationsgefäß einzuführen.

Indem man die Katalysatorkomponenten (A) und (I) auf ein partikuläres Trägermaterial, z.B. Silica oder Aluminiumoxid aufbringt, ist auch eine lösungsmittelfreie Reaktionsführung im Sinne einer Gasphasenpolymerisation möglich.

Geeignete Lösungsmittel umfassen insbesondere polare Lösungsmittel wie Etherverbindungen, z.B. Tetrahydrofuran, Diethylether, Dioxan, 2,5,8-Trioxanon, Anisol, Dimethoxyethan (DME) und Diethylenglykoldimethylether (Diglyme), sowie Dimethylformamid oder Dimethylsulfoxid.

Üblicherweise führt man die Polymerisation unter erhöhtem Kohlenmonoxiddruck durch. Allerdings wird auch bei einem Kohlenmonoxiddruck von einer Atmosphäre Polymerbildung beobachtet. Bevorzugt wird der Kohlenmonoxiddruck in einem Bereich von 2 bis 250 bar, insbesondere in einem Bereich von 10 bis 80 bar durchgeführt.

Geeignete Polymerisationstemperaturen bewegen sich im Bereich von Raumtemperatur, d.h. etwa 25°C, bis 150°C und werden bevorzugt auf Werte im Bereich von 35 bis 115°C eingestellt.

Die Polymerisation nach dem erfindungsgemäßen Verfahren kann sowohl absatzweise als auch kontinuierlich durchgeführt werden.

Im allgemeinen geht man bei der Reaktionsführung so vor, dass zunächst die Übergangsmetallkomplexe (A) und/oder (I) einzeln, gleichzeitig oder vorgemischt, gegebenenfalls unter Kühlung, in das Reaktionsgefäß gegeben werden. Auch das Nukleophil und/oder die Oxiranverbindung kann gegebenenfalls bereits der Lösung/Suspension der Katalysatorkomponenten (A) und/oder (I) beigemengt werden, bevor diese in das Reaktionsgefäß überführt werden. Des weiteren kann das Nukleophil und/oder die Oxiranverbindung auch direkt in das Reaktionsgefäß eingebracht werden. Die Säure wird bevorzugt als letzte Komponente hinzugegeben, jedoch ist auch eine andere Reihenfolge möglich. Bevorzugt wird die Polymerisation unter inerten Bedingungen, d.h. in Abwesenheit von Feuchtigkeit und Luft durchgeführt.

Abbruch, Trennung und Aufreinigung der Polymerisation können nach allgemein bekannten Verfahren vorgenommen werden. Beispielsweise lässt sich das Polymerprodukt durch Zugabe von niedermolekularen Alkoholen wie Methanol ausfällen und auf einfache Weise mittels Filtration isolieren.

Mit dem erfindungsgemäßen Verfahren lassen sich ausgehend von enantiomerenreiner Oxiranverbindung isotaktische Poly(3-hydroxyalkanoate) erhalten. Werden in optisch angereicherter Form vorliegende Oxiranverbindungen eingesetzt, gelangt man zu teilisotaktischen Polymeren, wobei der Grad an optischer Reinheit unmittelbar mit dem Grad an erzielter Isotaktizität im Copolymer korrespondiert. Auf diese Weise sowie über das Molekulargewicht lassen sich das thermoplastische Eigenschaftsprofil dieser biologisch abbaubaren Polymerklasse sehr einfach und gezielt für gewünschte Anwendungen einstellen.

Die nach dem erfindungsgemäßen Verfahren erhaltenen Polymere weisen in der Regel Molekulargewichte M_{w} größer 3.500, bevorzugt größer 4.000 g/mol auf. Die Polydispersitäten liegen im allgemeinen unterhalb von 10, bevorzugt unterhalb von 1,5 und besonders bevorzugt unterhalb von 1,4. Die Schmelzpunkte der erhaltenen Polymere liegen üblicherweise oberhalb von 50, bevorzugt oberhalb von 70, besonders bevorzugt oberhalb von 90°C.

Die nach dem erfindungsgemäßen Verfahren erhaltenen Polymere lassen sich mittels Spritzguss, Blasformen, Verspinnen, Rotationsformen oder Extrusion verarbeiten. Außerdem gelingt die Beschichtung metallischer, keramischer und anderer Oberflächen, z.B. solcher aus Kunststoffmaterialien, Holz, Papier oder Zellstoff.

Die erhaltenen Polymere eignen sich zur Herstellung von Fasern, Folien, Formkörpern und Beschichtungen. Weiterhin sind sie als Mischkomponenten in Kunststoffen verwendbar. Geeignete Mischungen werden beispielsweise erhalten mit Polybutylenterephthalat oder dem biologisch abbaubaren Polymer Ecoflex® , einem Copolymer aus Adipinsäure, Butandiol und Terephthalsäure. Details zur Zusammensetzung, zum Aufbau und zur Herstellung von Ecoflex® finden sich z.B. in European Chemical News, 1995 (7), Seite 36 beschrieben.

Die vorliegende Erfindung wird anhand der nachfolgenden Beispiele näher erläutert.

### Beispiele:

### Einsatzstoffe:

Diglyme wurde von der Firma Fluka bezogen (über Molekularsieb gelagert) und vor jeder Verwendung mittels Ultraschall unter erniedrigten Druck entgast. Alle weiteren Stoffe wurden von der Firma Fluka bezogen und jeweils ohne weitere Aufreinigung bei der Polymerisation eingesetzt.

### Untersuchungsmethoden:

Die ¹H-NMR-Spektren wurden an dem Gerät AMX 400 der Firma Bruker gemessen.

### Versuch 1:

Unter einer Stickstoffatmosphäre wurden bei Raumtemperatur 0,23 g Tetraethylammonium-Cobaltcarbonylat Et₄N[Co(CO)₄] in 20 ml Diglyme gelöst, und diese Lösung mittels einer Kanüle in einen Hochdruckreaktor (Reaktorvolumen 300 ml) überführt. Anschließend wurde Kohlenmonoxid aufgepreßt, bis ein Druck von 10 bar erreicht wurde. Anschließend wurden 15 ml racemisches Propylenoxid über eine Druckbürette zugegeben. Weiterhin wurde über eine Druckbürette in Diglyme (3 ml) gelöstes Pyridin (100 µl) zugegeben. Nachfolgend wurde die Temperatur erhöht und Kohlenmonoxid aufgepreßt, bis eine Temperatur von 70°C und ein Druck von 40 bar erreicht wurden. Die Polymerisation wurde unter Rühren über einen Zeitraum von 3 h durchgeführt. Die Polymerisation wurde durch Druckverminderung auf Umgebungsdruck und Temperatursenkung auf Raumtemperatur abgebrochen. Das erhaltene Reaktionsgemisch wurde zur Abtrennung der Cobaltsalze über eine mit Aluminiumoxid gefüllte Kolonne (Durchmesser 2,5 cm) gegeben. Anschließend erfolgte im Vakuum die Abtrennung des Diglyme und flüchtiger Nebenprodukte. Die Ausbeute des resultierenden Produkts betrug 9,5 g. Das Produkt wurde mittels ¹H-NMR-Spektroskopie als Poly-3-hydroxybutyrat identifiziert.

### Versuche 2-3 und Vergleichsversuch 1V:

Die Versuche 2-3 und Vergleichsversuch 1V wurden wie unter Versuch 1 beschrieben durchgeführt, jedoch wurden anstelle der in Versuch 1 genannten Übergangsmetallkomplexe und Nucleophile sowie der in Versuch 1 genannten Übergangsmetallkomplexmenge die in Tabelle 1 wiedergegebenen Stoffe und Mengen eingesetzt.

Tabelle 1 gibt auch die jeweils erreichten Produktausbeuten wieder.

**Tabelle 1:**

| Versuch | Übergangsmetallkomplex (I) | Menge Übergangsmetallkomplex (mg) | Nucleophil | Ausbeute Produkt (g) |
|---|---|---|---|---|
| 1 | Et₄N[Co(CO)₄] | 230 | Pyridin | 9,5 |
| 2 | Et₄N[Co(CO)₄] | 207 | 2-Methylpyridin | 4,6 |
| 3 | Ph₃Si[Co(CO)₄] | 244 | Pyridin | 9,3 |
| 1V | Et₄N[Co(CO)₄] | 215 | 3-Hydroxypyridin | 2,1 |

Die Versuche belegen, daß durch den Einsatz der gemäß der erfindungsgemäßen Verfahren verwendbaren Nukleophile verbesserte Ausbeuten erhalten werden.

## Patentansprüche

1. Katalytisches Verfahren zur Herstellung von Poly-(3-hydroxyalkanoaten) durch Copolymerisation einer Oxiranverbindung mit Kohlenmonoxid in Gegenwart
a) mindestens eines Nucleophils, welches eine organische Verbindung enthaltend mindestens ein Atom der Gruppe 15 des Periodensystems der Elemente, ausgenommen hydroxysubstituierter Pyridinverbindungen, ist, und
b) mindestens eines ein- oder mehrkernigen anionischen Übergangsmetallkomplexes der allgemeinen Formel (I)
(M_{β}⁽ⁿ⁺⁾)ₘ[M_{α}(L)₄]ₗ, (I),
in der die Variablen und Indizes die folgende Bedeutung haben:
M_{α} ein Übergangsmetall der 8. bis 10. Gruppe des Periodensystems der Elemente mit der Formalladung -1,
L PR₃, P(OR)₃, NR₃, SR₂, OR₂, CO, R-CN, R-NO₂, (RO)(R'O)C=O, (R)(R')C=O, (R)C=O(OR'),
M_{β} ein Metall der 1. und 2. Gruppe des Periodensystems der Elemente, Zn oder Hg, Bis(triarylphosphin)iminium, Trityl, Si(R)₃ oder T(R)₄ mit
T N, P oder As,
R, R' H, Alkyl, Aryl oder Arylalkyl,
m, n 1 oder 2 und
1 n x m, durchgeführt wird.

2. Verfahren nach Anspruch 1, **dadurch gekennzeichnet, dass** M_{β} in Formel (I) ein Metall der 1. oder 2. Gruppe des Periodensystems der Elemente, Zn oder Hg bedeutet.

3. Verfahren nach den Ansprüchen 1 bis 2, **dadurch gekennzeichnet, dass** man die Copolymerisation in Gegenwart einer Protonenquelle durchführt.

4. Verfahren nach Anspruch 3, **dadurch gekennzeichnet, dass** man als Protonenquelle eine Säure ausgewählt aus der Gruppe enthaltend Essigsäure, insbesondere Eisessig, Salzsäure, beispielsweise gelöst in Ether, Benzoesäure, Tetrafluoroborsäure, Phenol und deren Mischungen verwendet.

5. Verfahren nach den Ansprüchen 1 bis 4, **dadurch gekennzeichnet, dass** zusätzlich ein Übergangsmetallkomplex (A) ausgewählt aus der Gruppe enthaltend Co₂(CO)₈, Ru₃(CO)₁₂. Rh₄(CO)₁₂. Rh₆(CO)₁₆, Co₄(CO)₁₂, Co(CO)₃(NO), Fe₂(CO)₁₀. Fe₂(CO)₉, Ni(CO)₄, Mn₂(CO)₁₀, Mo(CO)₆ und W(CO)₆ zugegen ist.

6. Verfahren nach den Ansprüchen 1 bis 5, **dadurch gekennzeichnet, daß** das Nucleophil ausgewählt ist aus der Gruppe enthaltend heterozyklische Verbindungen enthaltend Stickstoff und/oder Phosphor als Heteroatom und Mono-, Di- und Trialkyl- und/oder -arylamine und Mono-, Di- und Trialkyl- und/oder - arylphosphane, ausgenommen hydroxy-substituierter Pyridinverbindungen.

7. Verfahren nach Anspruch 6, **dadurch gekennzeichnet, daß** das Nucleophil ausgewählt ist aus der Gruppe enthaltend Pyridin, Lutidin, Imidazol, Chinolin, Dimethylaminopyridin, Triethylamin, Methylalanin, Morpholin, 1,4-Diazabicyclo[2,2,2]octan und Pyridin.

8. Verfahren nach Anspruch 7, **dadurch gekennzeichnet, daß** das Nucleophil Pyridin ist.

9. Verfahren nach den Ansprüchen 1 bis 8, **dadurch gekennzeichnet, daß** das Nucleophil chiral ist.

10. Verfahren nach den Ansprüchen 1 bis 9, **dadurch gekennzeichnet, daß** das Nucleophil optisch aktiv ist.

11. Verfahren nach den Ansprüchen 1 bis 10, **dadurch gekennzeichnet, dass** man eine Oxiranverbindung in enantiomerenreiner oder in optisch angereicherter Form einsetzt.

12. Verfahren nach den Ansprüchen 1 bis 11, **dadurch gekennzeichnet, dass** die Oxiranverbindung Propylenoxid (PO) ist.

13. Verfahren nach den Ansprüchen 1 bis 11, **dadurch gekennzeichnet, dass** die Oxiranverbindung Ethylenoxid (EO) oder i-Butenoxid ist.

## Claims

1. A catalytic process for preparing poly(3-hydroxyalkanoates) by copolymerizing an oxirane compound with carbon monoxide in the presence of
a) at least one nucleophile which is an organic compound comprising at least one atom of group 15 of the Periodic Table of the Elements, other than hydroxy-substituted pyridine compounds, and
b) at least one single- or multicenter anionic transition metal complex of the formula (I)
(M_{β}⁽ⁿ⁺⁾)ₘ[M_{α}(L)₄]ₗ, (I),
where the variables and indices have the following meanings:
M_{α} is a transition metal of the 8^{th} to 10^{th} group of the Periodic Table of the Elements having formal charge -1,
L is PR₃, P(OR)₃, NR₃, SR₂, OR₂, CO, R-CN, R-NO₂, (RO)(R'O)C=O, (R)(R')C=O, (R)C=O(OR'),
M_{β} is a metal of the 1^{st} or 2^{nd} group of the Periodic Table of the Elements, Zn, or Hg, bis(triarylphosphine)iminium, trityl, Si(R)₃, or T(R)₄, where
T is N, P or As,
R, and R' are H, alkyl, aryl, or arylalkyl,
m, and n are 1 or 2, and
l is n x m, is carried out.

2. The process according to claim 1, wherein M_{β} in formula (I) is a metal of the 1^{st} or 2^{nd} group of the Periodic Table of the Elements, Zn, or Hg.

3. The process according to any of claims 1 to 2, wherein the copolymerization is carried out in the presence of a proton source.

4. The process according to claim 3, wherein the proton source used comprises an acid selected from the group comprising acetic acid, in particular glacial acetic acid, hydrochloric acid, for example dissolved in ether, benzoic acid, tetrafluoroboric acid, phenol, and mixtures of these.

5. The process according to any of claims 1 to 4, wherein a transition metal complex (A) selected from the group comprising Co₂(CO)₈, Ru₃(CO)₁₂, Rh₄(CO)₁₂, Rh₆(CO)₁₆, CO₄(CO)₁₂, Co(CO)₃(NO), Fe₂(CO)₁₀, Fe₂(CO)₉, Ni(CO)₄, Mn₂(CO)₁₀, Mo(CO)₆, and W(CO)₆ is also present.

6. The process according to any of claims 1 to 5, wherein a nucleophile is selected from the group comprising heterocyclic compounds comprising nitrogen and/or phosphorus as heteroatom, and mono-, di-, and trialkyl- and/or
- arylamines, and mono-, di-, and trialkyl- and/or
- arylphosphanes, other than hydroxy-substituted pyridine compounds.

7. The process according to claim 6, wherein the nucleophile is selected from the group comprising pyridine, lutidine, imidazole, quinoline, dimethylaminopyridine, triethylamine, methylalanine, morpholine, 1,4-diazabicyclo[2,2,2]octane, and pyridine.

8. The process according to claim 7, wherein the nucleophile is pyridine.

9. The process according to any of claims 1 to 8, wherein the nucleophile is chiral.

10. The process according to any of claims 1 to 9, wherein the nucleophile is optically active.

11. The process according to any of claims 1 to 10, wherein use is made of an oxirane compound in enantiomerically pure or optically enriched form.

12. The process according to any of claims 1 to 11, wherein the oxirane compound is propylene oxide (PO).

13. The process according to any of claims 1 to 11, wherein the oxirane compound is ethylene oxide (EO) or isobutene oxide.

## Revendications

1. Procédé catalytique de préparation de poly-(3-hydroxyalcanoates) par copolymérisation d'un composé oxiranne avec du monoxyde de carbone, en présence
a) d'au moins un nucléophile qui est un composé organique contenant au moins un atome du groupe 15 du système périodique des éléments, à l'exception des composés de pyridine à substitution hydroxy, et
b) d'au moins un complexe de métal de transition anionique à un ou plusieurs noyaux, répondant à la formule générale (I) :
(M_{β}⁽ⁿ⁺⁾)ₘ[M_{α}(L)₄]ₗ (I)
dans laquelle les variables et indices ont les significations suivantes :
M_{α} représente un métal de transition des groupes 8 à 10 du système périodique des éléments ayant la charge formelle -1,
L représente PR₃, P(OR)₃, NR₃, SR₂, OR₂, CO, R-CN, R-NO₂, (RO)(R'O)C=O, (R)(R')C=O, (R)C=O(OR'),
M_{β} représente un métal des groupes 1 et 2 du système périodique des éléments, Zn ou Hg, du bis(triarylphosphine)iminium, du trityle, Si(R)₃ ou T(R)₄, où
T représente N, P ou As,
R, R' représentent H ou un groupe alkyle, aryle ou arylalkyle,
m, n valent 1 ou 2, et
1 représente n x m.

2. Procédé suivant la revendication 1, **caractérisé en ce que** M_{β} représente dans la formule (I) un métal du groupe 1 ou 2 du système périodique des éléments, Zn ou Hg.

3. Procédé suivant les revendications 1 et 2, **caractérisé en ce qu'**on effectue la copolymérisation en présence d'une source de protons.

4. Procédé suivant la revendication 3, **caractérisé en ce que**, comme source de protons, on utilise un acide choisi parmi le groupe contenant de l'acide acétique, en particulier de l'acide acétique glacial, de l'acide chlorhydrique, par exemple en solution dans de l'éther, de l'acide benzoïque, de l'acide tétrafluoroborique, du phénol ou leurs mélanges.

5. Procédé suivant les revendications 1 à 4, **caractérisé en ce qu'**un complexe de métal de transition (A) choisi parmi le groupe comportant CO₂(CO)₈, Ru₃(CO)₁₂, Rh₄(CO)₁₂, Rh₆(CO)₁₆, CO₄(CO)₁₂, Co(CO)₃(NO), Fe₂(CO)₁₀, Fe₂(CO)₉, Ni(CO)₄, Mn₂(CO)₁₀, Mo(CO)₆ et W(CO)₆ est ajouté en supplément.

6. Procédé suivant les revendications 1 à 5, **caractérisé en ce que** le nucléophile est choisi parmi le groupe contenant des composés hétérocycliques comportant de l'azote et/ou du phosphore comme hétéroatome et des mono-, di- et trialkyl- et/ou -arylamines et des mono-, di- et trialkyl- et/ou -arylphosphanes, à l'exception des composés de pyridine à substitution hydroxy.

7. Procédé suivant la revendication 6, **caractérisé en ce que** le nucléophile est choisi parmi le groupe comprenant de la pyridine, de la lutidine, de l'imidazole, de la quinoléine, de la diméthylaminopyridine, de la triéthylamine, de la méthylalanine, de la morpholine, du 1,4-diazabicyclo[2,2,2]octane et de la pyridine.

8. Procédé suivant la revendication 7, **caractérisé en ce que** le nucléophile est de la pyridine.

9. Procédé suivant les revendications 1 à 8, **caractérisé en ce que** le nucléophile est chiral.

10. Procédé suivant les revendications 1 à 9, **caractérisé en ce que** le nucléophile est optiquement actif.

11. Procédé suivant les revendications 1 à 10, **caractérisé en ce qu'**on met en oeuvre un composé oxiranne sous une forme pure quant aux énantiomères ou sous une forme enrichie du point de vue optique.

12. Procédé suivant les revendications 1 à 11, **caractérisé en ce que** le composé oxiranne est de l'oxyde de propylène (PO).

13. Procédé suivant les revendications 1 à 11, **caractérisé en ce que** le composé oxiranne est de l'oxyde d'éthylène (EO) ou de l'oxyde d'i-butène.
